# EUROPÄISCHE PATENTANMELDUNG

(11) **EP 1 107 047 A2**
(43) Veröffentlichungstag der Anmeldung: **13.06.2001**
(21) Anmeldenummer: 00126250.0
(22) Anmeldetag: 01.12.2000
(51) Int. Cl.: G02F 1/133, G02F 1/1335, H05B 3/14

(54) **Heizvorrichtung**

(30) Priorität: 14.01.2000 DE 10001249; 03.12.1999 DE 19958362; 03.12.1999 DE 19958354; 23.11.2000 DE 10058296
(71) Anmelder: Mannesmann VDO AG, 60388 Frankfurt am Main (DE)
(72) Erfinder: Brandt, Peter, 63739 Aschaffenburg (DE); Simon, Ernst-Ulrich, 61440 Oberursel/Ts. (DE)
(74) Vertreter: Klein, Thomas, Dipl.-Ing. (FH)

(57) **Zusammenfassung**

Bei einer Heizvorrichtung (3) ermöglicht ein konduktives Polymer (6) eine einfache und kostengünstige Beheizung eines beliebigen Objektes. Dabei eignet sich die Heizvorrichtung (3) aufgrund der im wesentlichen transparenten Eigenschaften des Polymeres (6) insbesondere für Anzeigeinstrumente (1) in Kraftfahrzeugen, wobei weder der Strahlengang des Lichtes eingeschränkt noch die Helligkeit des Anzeigeinstrumentes (1) reduziert wird. Dabei ermöglicht das Anbringen des Polymeres (6) auf einem beispielsweise auch frei formbaren Substrat (4) einen problemlosen, auch nachträglichen Einsatz, so dass der Herstellungsaufwand erheblich reduziert werden kann.

## Beschreibung

Die Erfindung betrifft eine Heizvorrichtung, insbesondere zur Beheizung von Anzeigeinstrumenten in Kraftfahrzeugen.

Zum Beispiel bei mit einer Flüssigkristallzelle ausgestatteten Anzeigeeinrichtungen, die zumindest zeitweise bei niedrigen Umgebungstemperaturen betrieben werden, wie dies beispielsweise bei Anzeigeeinrichtungen in Kraftfahrzeugen der Fall ist, tritt das Problem auf, dass bei tiefen Temperaturen die Schaltzeiten unerwünscht groß werden, so dass die damit ausgestatteten Anzeigeeinrichtungen eine erhebliche Trägheit annehmen. Um diesem Missstand abzuhelfen, ist es bekannt, die Abwärme einer der Beleuchtung der Flüssigkristallzelle der Anzeigeeinrichtung dienenden Lichtquelle zu nutzen. Mittels der von der Lichtquelle abgestrahlten Wärme wird die Flüssigkristallzelle erwärmt und auf dem erforderlichen Temperaturniveau gehalten, wodurch es trotz niedriger Umgebungstemperaturen möglich wird, die Anzeigeeinrichtung mit den erforderlichen Schaltzeiten zu betreiben. Aufgrund des relativ großen Abstandes zwischen der Lichtquelle und der Flüssigkristallzelle ist eine vergleichsweise hohe Energiezufuhr und damit eine relativ große Wärmeabstrahlung erforderlich. Dabei wirkt sich nachteilig aus, dass durch die Wärmeabstrahlung in unerwünschter Weise auch die übrigen Bauelemente der Anzeigeeinrichtung erwärmt werden. Hierbei erweist sich vor allem die Temperaturempfindlichkeit der Polarisationsfilter der Flüssigkristallzelle als problematisch. Weiterhin erreicht die Lichtquelle bei Inbetriebnahme erst nach einer gewissen Vorlaufzeit die erforderliche Betriebstemperatur, die eine Nutzung der Abwärme in der beschriebenen Weise ermöglicht. Diese zeitliche Verzögerung ist daher mit einer äußerst schlechten Ablesbarkeit der Anzeigeeinrichtung und somit einer unerwünschten Minderung der Verkehrssicherheit verbunden.

Es sind auch Lösungsvorschläge bekannt, bei denen ein dünner, außenseitig an der Flüssigkristallzelle angeordneter Heizdraht zur Erwärmung der Anzeigeeinrichtung verwendet wird. Diese Anordnung ist mit dem Nachteil behaftet, dass die Erwärmung auch solche Bauelemente der Anzeigeeinrichtung oder benachbarter Anzeigen einschließt, deren übermäßige Erwärmung zu Schäden führen kann.

Die beispielhaft aufgeführten Einsatzmöglichkeiten haben gemeinsam, dass sie einen bestimmtem Temperaturbereich benötigen, um optimal arbeiten zu können. Außerdem soll jeweils eine kompakte Baueinheit realisierbar sein, was in der Regel eine Anordnung der Heizvorrichtung im optischen Strahlengang bedeutet.

Die Erfindung beruht somit auf dem Problem, eine effektiv arbeitende Heizvorrichtung zu schaffen, die in einfacher und platzsparender Weise mit dem zu erwärmenden Objekt kombiniert werden kann. Außerdem soll eine Aufheizung einer Anzeigeeinrichtung auch bei niedrigen Temperaturen zuverlässig erfolgen.

Es wird daher vorgeschlagen, die Heizvorrichtung mit einem konduktiven Polymer auszustatten.

Eine solche Heizvorrichtung kann in solchen Fällen eingesetzt werden, bei denen eine einfache und zuverlässige Beheizung erforderlich ist, ohne dabei in einen möglichen Strahlengang des Lichtes einzugreifen. Hierzu eignet sich das konduktive Polymer aufgrund seiner im wesentlichen transmissiven Eigenschaften. Dabei wird es möglich, eine großflächige Erwärmung ohne die Gefahr von schädigenden Temperaturdifferenzen und damit möglicherweise verbundenen Materialspannungen zu erreichen. Zugleich ist die Verarbeitung einer mit dem konduktiven Polymer ausgestatteten Heizvorrichtung im Vergleich zu anderen, insbesondere mit einem Heizdraht ausgestatteten Heizvorrichtungen erheblich vereinfacht. Beispielsweise kann das Polymer als Beschichtung unmittelbar auf das zu beheizende Objekt aufgetragen und mittels ebenfalls weitgehend transparenter Elektroden kontaktiert werden.

Alternativ dazu kann das konduktive Polymer auch auf einem im wesentlichen transmissiven Substrat angeordnet sein, das mit dem zu beheizenden Objekt verbunden oder im Abstand dazu gehalten ist. Hierdurch wird das Herstellungsverfahren wesentlich vereinfacht, indem nicht das zu beheizende Objekt unmittelbar mit dem Polymer verbunden werden muss, sondern lediglich das zur Beschichtung mit dem Polymer optimal geeignete Substrat. Hierdurch kann die so geschaffene Heizvorrichtung in großen Stückzahlen hergestellt und dadurch der Herstellungsaufwand verringert werden. Dabei ist der mögliche Einsatzbereich des Substrates aufgrund der einfachen und individuellen Anpassbarkeit der Beschaffenheit und Leistungsfähigkeit des Polymeres an die jeweiligen Einsatzbedingungen nahezu unbegrenzt. Beispielsweise ist so auch eine einfache Nachrüstung bereits vorhandener Anzeigeinstrumente durch die einfache Handhabbarkeit problemlos möglich.

Hierbei ist eine besonders empfehlenswerte Weiterbildung der Erfindung dadurch gegeben, dass das Polymer auf einem Substrat einer Flüssigkristallanzeige angeordnet ist. Hierdurch wird es in einfacher Weise möglich, eine Beheizung der Flüssigkristallanzeige vorzusehen, bei der einerseits die Gefahr der Beschädigung von Bauelementen der Flüssigkristallanzeige durch Überhitzung ausgeschlossen ist, andererseits eine gleichmäßige Erwärmung zur Vermeidung von Farbverfälschungen bei gleichzeitig ungehindertem Lichtdurchtritt durch die Flüssigkristallanzeige vorzusehen. Beispielsweise kann eine Zellenwand der Flüssigkristallzelle mit einer Beschichtung des konduktiven Polymeres versehen sein. Weiterhin kann das Polymer bei einer als DSTN-Zelle mit zwei hintereinander angeordneten Flüssigkristallzellen ausgeführten Flüssigkristallanzeige zwischen den Flüssigkristallzellen angeordnet werden, wodurch sich eine einfache und gleichmäßige Erwärmung der beiden Zellen erreichen lässt.

Eine andere, besonders vorteilhafte Ausgestaltung der erfindungsgemäßen Heizvorrichtung lässt sich dadurch erreichen, dass das Polymer auf einer Streuscheibe des Anzeigeinstrumentes aufgebracht ist. Hierdurch ergibt sich ein individueller Einsatz der so mühelos beheizbaren Streuscheibe. Daher können sowohl die zur Darstellung dienenden Anzeigeinstrumente als auch die hierzu erforderlichen Lichtquellen gleichermaßen beheizt werden, um so die für eine optimale Darstellung erforderliche Betriebstemperatur auch bei niedrigen Umgebungstemperaturen schnell zu erreichen. Die Streuscheibe ist dabei problemlos auch bei bereits vorhandenen Anzeigeinstrumenten nachrüstbar und im Servicefall leicht austauschbar.

Eine besonders vorteilhafte Weiterbildung der Erfindung wird auch dadurch erreicht, dass das Substrat flexibel ist. Hierdurch wird ein weitgehend uneingeschränkter Einsatz des Substrates erreicht, indem das Substrat an gegebene Einbaubedingungen flexibel angepasst und in seinen Abmessungen mühelos verändert werden kann. Das Substrat kann hierzu als Folie ausgeführt sein, so dass der Einsatz des Substrates bei unterschiedlichsten Verwendungszwecken ohne konstruktive Änderungen an dem zu beheizenden Objekt ermöglicht wird.

Eine andere, besonders günstige Abwandlung der Erfindung wird dadurch erreicht, dass das Substrat formbar ist. Hierdurch wird der Einsatz des Substrates auch bei solchen Anzeigeinstrumenten möglich, die aufgrund der vorgesehenen Einbauposition eine gewölbte oder mit Vorsprüngen versehene Gestaltung aufweisen. Dabei kann das Substrat sowohl elastisch verformbar sein, um so eine Beweglichkeit zu ermöglichen, als auch nach der Formgebung eine Eigenstabilität aufweisen, die hierbei beispielsweise auch eine tragende Funktion erfüllen kann.

Man könnte sich vorstellen, dass das Substrat eine Folie oder ein Netz ist. Von besonderem Vorteil für die Herstellung und Handhabung der Heizvorrichtung ist es jedoch, wenn gemäß einer anderen vorteilhaften Weiterbildung der Erfindung das Substrat eine Glas- oder Kunststoffscheibe ist. Derartige Scheiben lassen sich (z. B. in einem Druck- oder Streichverfahren) einfach mit dem konduktiven Polymer beschichten, sind preiswert und können eine hohe Transmission aufweisen.

Grundsätzlich ist es denkbar, das konduktive Polymer z. B. durch eine Dotierung mit Farb- und/oder Streupartikeln gleichzeitig als optisches Element (Farbfilter, Diffusor) einzusetzen. Gemäß einer anderen vorteilhaften Weiterbildung der Erfindung weist das konduktive Polymer hingegen eine hohe Transmission auf. Dadurch erfolgt eine nur geringe Beeinflussung des Strahlengangs, insbesondere wird die Leuchtstärke einer Lichtquelle nicht unnötig vermindert oder die Darstellung auf einer Anzeige nicht verfälscht. Vorteilhaft beträgt die Transmission des konduktiven Polymers mindestens 90%.

Das konduktive Polymer könnte streifen- oder mäanderförmig z. B. auf dem Substrat angeordnet sein. Gemäß einer anderen vorteilhaften Weiterbildung der Erfindung ist das konduktive Polymer jedoch flächig angeordnet. Dadurch ist die Herstellung der Heizvorrichtung erheblich vereinfacht, und bei einer Anordnung der Heizvorrichtung in einem optischen Strahlengang sind Inhomogenitäten der Darstellung auf diese Weise ausgeschlossen.

Die Kontaktelemente der Heizvorrichtung können außerhalb eines sichtbaren Bereiches einer Anzeige angeordnet sein. Eine besonders zweckmäßige Ausführungsform der Erfindung ist hingegen dann erreicht, wenn eine elektrische Kontaktierung des konduktiven Polymers transparent ausgeführt ist. Hierdurch wird eine geringe Baugröße der Heizvorrichtung erreicht, da außenliegende und damit vergleichsweise umständliche Kontaktierungen entfallen. Die Kontaktierung erfolgt hierzu beispielsweise mit transparenten Leiterbahnen, die im Inneren der Anzeigeeinrichtung mühelos angebracht werden können.

Eine andere, besonders vielseitige Ausgestaltung der Erfindung wird dadurch erreicht, dass die Heizvorrichtung als wahlweise einsetzbares Bauelement ausgeführt ist. Hierdurch wird ein individueller Einsatz der Heizvorrichtungen auch bei unterschiedlichen Betriebsbedingungen möglich. Beispielsweise ist der Einsatz der Heizvorrichtung lediglich bei solchen Kraftfahrzeugvarianten problemlos möglich, die für kalte geographische Gebiete bestimmt sind, wobei zusätzlich noch die Auswahl zwischen unterschiedlich leistungsfähigen Ausführungsformen der Heizvorrichtung gegeben ist. Zugleich können bereits vorhandene Anzeigeeinrichtungen mit der Heizvorrichtung mühelos nachgerüstet werden.

Die Erfindung läßt verschiedene Ausführungsformen zu. Zur weiteren Verdeutlichung ihres Grundprinzips ist dieses in den folgenden Zeichnungen dargestellt und nachfolgend beschrieben. Es zeigen:
- Fig. 1:: Eine geschnittene Seitenansicht eines Anzeigeinstrumentes in Prinzipdarstellung mit einer Heizvorrichtung;
- Fig. 2:: Einen Schnitt durch eine erste Ausführungsform einer Flüssigkristallzelle mit einem Polfilter;
- Fig. 3:: Einen Schnitt durch eine zweite Ausführungsform einer Flüssigkristallzelle mit einem Polfilter;
- Fig. 4:: Eine perspektivische Skizze einer erfindungsgemäßen Anzeigeeinrichtung mit einer von zwei Flüssigkristallzellen gebildeten DSTN-Zelle.

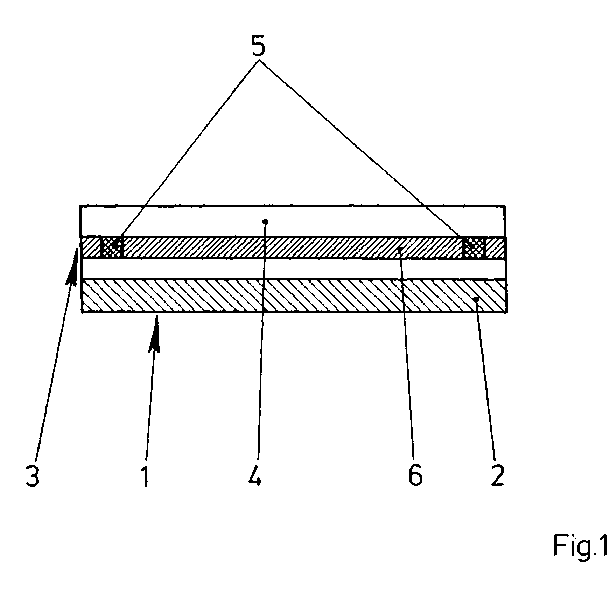

Figur 1 zeigt in einer Prinzipdarstellung eine geschnittene Seitenansicht eines Anzeigeinstrumentes 1, welches eine Flüssigkristallanzeige 2 und eine Heizvorrichtung 3 umfasst und Bestandteil eines hier nicht weiter dargestellten Kombinationsanzeigeinstruments eines Kraftfahrzeugs ist. Zu erkennen ist ein mit der Heizvorrichtung 3 verbundenes und als Streuscheibe ausgeführtes Substrat 4. Die Heizvorrichtung 3 weist gegenüber der Flüssigkristallanzeige 2 lediglich einen geringen Abstand auf und ermöglicht so eine einfache und effektive Beheizung der Flüssigkristallanzeige 2, ohne das Risiko einer Rissbildung aufgrund lokaler Temperaturdifferenzen. Die Heizvorrichtung 3 hat dabei ein flächiges, durch eine Kontaktierung 5, beispielsweise mittels einer Silberpaste, angeschlossenes konduktives Polymer 6, welches jeweils im Siebdruckverfahren aufgetragen wird.

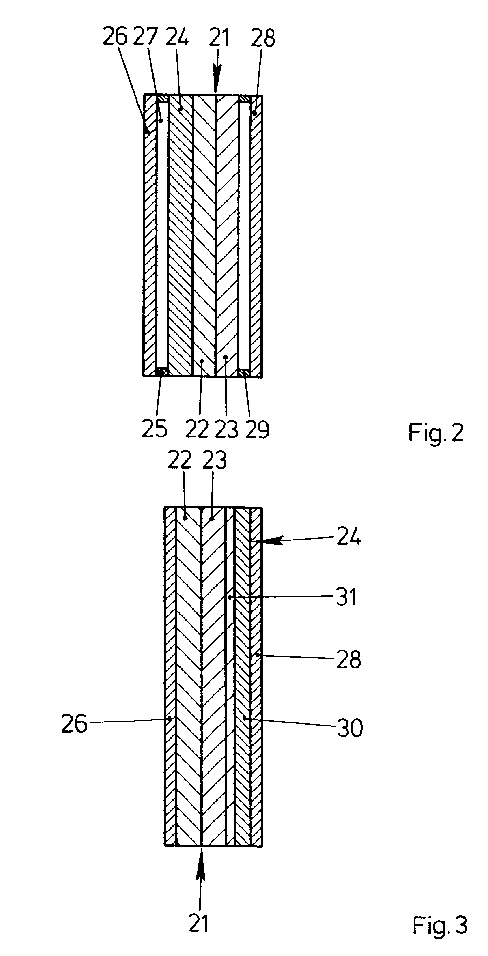

Die Figur 2 zeigt eine Flüssigkristallzelle 21, welche zwei übliche, aufeinanderliegende LCD-Scheiben 22, 23 hat. Auf der dem Betrachter zugewandten LCD-Scheibe 22 liegt ein Heizer 24 auf, bei dem es sich um eine elektrisch leitend beschichtete Glasscheibe handelt. Die flächig auf die Glasscheibe aufgebrachte elektrisch leitende Schicht weist ein konduktives Polymer auf und dient als Heizwiderstand für den Heizer 24. Ein auf dem Heizer 24 aufsitzender Rahmen 25 hält einen als Frontpolfilter dienenden Polfilter 26 mit geringem Abstand zu dem Heizer 24, so dass zwischen dem Heizer 24 und dem Polfilter 26 eine Isolationsschicht 27 entsteht, die bei diesem Beispiel durch eine Luftschicht gebildet wird und verhindert, dass unerwünscht viel Wärme vom Heizer 24 zum Polfilter 26 gelangen kann.

Auf der Rückseite der Flüssigkristallzelle 21 ist ebenfalls ein Polfilter 28 angeordnet, welcher durch einen Rahmen 29 Abstand von der rückseitigen LCD-Scheibe 23 hat.

Bei der Ausführungsform nach Figur 3 ist als Isolationsschicht eine Scheibe 30 aus Glas vorgesehen, welche auf ihrer der LCD-Scheibe 23 zugewandten Seite eine elektrisch leitende, ein konduktives Polymer aufweisende Schicht 31 hat, die den Heizer 24 bildet. Auf diese Weise hat der Polfilter 28 ebenfalls Abstand von dem Heizer 24. Der zweite Polfilter 26 liegt bei der in Figur 3 gezeigten Ausführungsform unmittelbar auf der LCD-Scheibe 22 auf. Da diese durch die LCD-Scheibe 23 Abstand von dem Heizer 24 hat, kommt es zu keiner unzulässig hohen Wärmebelastung des Polfilters 26.

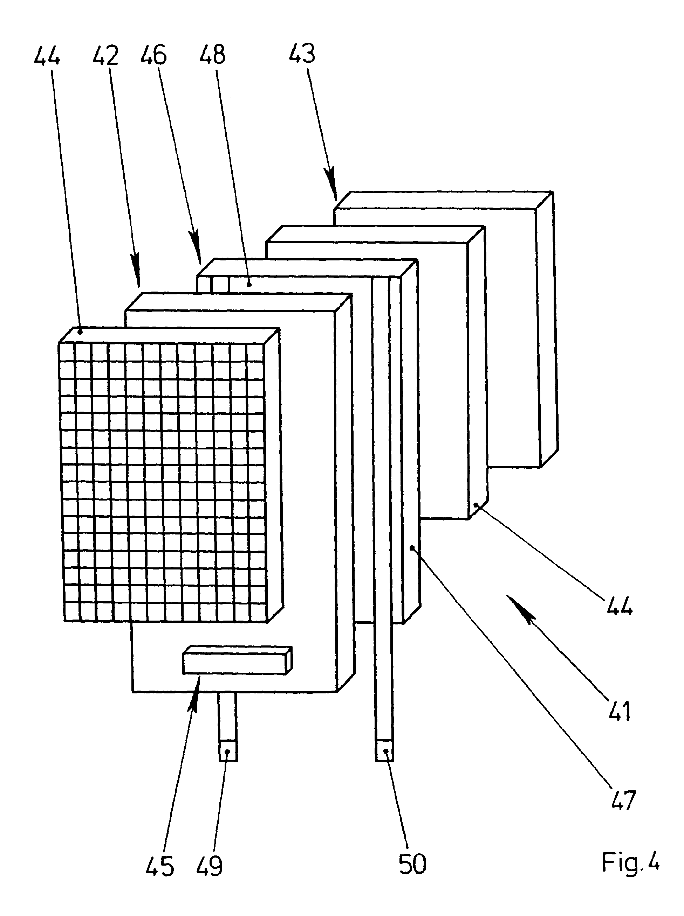

Figur 4 zeigt in einer perspektivischen Skizze eine erfindungsgemäße Anzeigeeinrichtung 41 mit einer durch eine erste Flüssigkristallzelle 42 und durch eine zweite Flüssigkristallzelle 43 gebildeten DSTN-Zelle. Zwischen den beiden jeweils mit einem Segmentdisplay 44 und einer Steuerung 45 ausgestatteten Flüssigkristallzellen 42, 43 ist eine zentrale Heizvorrichtung 46 angeordnet. Diese Heizvorrichtung 46 hat hierzu eine im wesentlichen transparente Scheibe 47, auf der ein ebenfalls transparentes, als konduktives Polymer ausgeführtes Widerstandselement 48 derart angeordnet ist, dass es sich über die gesamte sichtbare Fläche der Anzeigeeinrichtung 41 und in einem im wesentlichen gleichbleibenden Abstand zu den Flüssigkristallzellen 42, 43 erstreckt. Hierdurch werden Rückwirkungen, insbesondere durch Ausbildung eines elektrischen Feldes verhindert. Die Heizvorrichtung 46 hat weiterhin zwei außerhalb des sichtbaren Bereiches der Anzeigeeinrichtung 41 angeordnete Kontaktierungen 49, 50, die einen problemlosen Anschluss und damit eine einfache Nachrüstung der Heizvorrichtung 46 ermöglicht.

## Patentansprüche

1. Heizvorrichtung, insbesondere zur Beheizung von Anzeigeinstrumenten in Kraftfahrzeugen, **dadurch gekennzeichnet**, dass die Heizvorrichtung mit einem konduktiven Polymer ausgestattet ist.

2. Heizvorrichtung nach Anspruch 1, **dadurch gekennzeichnet**, dass das konduktive Polymer (6) auf einem im wesentlichen transmissiven Substrat (4) angeordnet ist.

3. Heizvorrichtung nach Anspruch 1 oder 2, **dadurch gekennzeichnet**, dass das Polymer (6) auf einem Substrat (4) einer Flüssigkristallanzeige (2) angeordnet ist.

4. Heizvorrichtung nach zumindest einem der vorhergehenden Ansprüche, **dadurch gekennzeichnet**, dass das Polymer (6) auf einer Streuscheibe des Anzeigeinstrumentes (1) aufgebracht ist.

5. Heizvorrichtung nach zumindest einem der vorhergehenden Ansprüche, **dadurch gekennzeichnet**, dass das Substrat (4) flexibel ist.

6. Heizvorrichtung nach zumindest einem der vorhergehenden Ansprüche, **dadurch gekennzeichnet**, dass das Substrat (4) formbar ist.

7. Heizvorrichtung nach zumindest einem der Ansprüche 2 bis 6, **dadurch gekennzeichnet**, dass das Substrat eine Glas- oder Kunststoffscheibe ist.

8. Heizvorrichtung nach zumindest einem der vorhergehenden Ansprüche, **dadurch gekennzeichnet**, dass das konduktive Polymer eine hohe Transmission aufweist.

9. Heizvorrichtung nach zumindest einem der vorhergehenden Ansprüche, **dadurch gekennzeichnet**, dass das konduktive Polymer flächig angeordnet ist.

10. Heizvorrichtung nach zumindest einem der vorhergehenden Ansprüche, **dadurch gekennzeichnet**, dass eine elektrische Kontaktierung des konduktiven Polymers transparent ausgeführt ist.

11. Heizvorrichtung nach zumindest einem der vorhergehenden Ansprüche, **dadurch gekennzeichnet**, dass die Heizvorrichtung als wahlweise einsetzbares Bauelement ausgeführt ist.
